# EUROPÄISCHE PATENTSCHRIFT

(11) **EP 1 188 971 B1**
(45) Veröffentlichungstag und Bekanntmachung des Hinweises auf die Patenterteilung: **23.03.2005**
(21) Anmeldenummer: 01121126.5
(22) Anmeldetag: 04.09.2001
(51) Int. Cl.: F16J 15/32

(54) **Abstreifkombination**
Scraper arrangement
Dispositif racleur

(30) Priorität: 14.09.2000 DE 10045393
(43) Veröffentlichungstag der Anmeldung: 20.03.2002
(73) Patentinhaber: Ludwig Ehrhardt GmbH, 35321 Laubach (DE)
(72) Erfinder: Peter, Jörg, Dipl.-Ing. (FH), 71101 Schönaich (DE)
(74) Vertreter: von Ahsen, Erwin-Detlef

(56) Entgegenhaltungen:
- DE-A- 4 441 474
- FR-A- 2 497 904
- US-A- 3 608 911
- US-A- 5 697 710

## Beschreibung

Die Erfindung betrifft eine Abstreifvorrichtung zum Vermindern des Eindringens von verunreinigten Flüssigkeiten in das Innere von Arbeitsgeräte, die mit Kolbenstangen und/oder langsam drehenden Wellen bestückt sind, mit: einem Einsatz zur Einfügung in eine Ausnehmung in einem Gehäuse des Arbeitsgerätes, der eine Aussparung besitzt, in die ein U-förmiger Ring eingepreßt ist, dessen einer Schenkel bündig mit dem Innendurchmesser des Einsatzes abschließt und den Raum innerhalb der Aussparung in zwei Hälften teilt.

Eine solche Abstreifvorrichtung ist aus der DE 44 41 474 A1 bekannt.

Arbeitsgeräte, die mit Kolbenstangen und oder Wellen bestückt sind werden u.a. in Bearbeitungsvorgängen eingesetzt, bei denen infolge der Bearbeitung von Werkstücken Verunreinigungen, wie Späne und Flüssigkeiten, anfallen. Gerade in bei der spanabhebenden Bearbeitung von Werkstücken erfolgen die Bearbeitungsvorgänge oft unter Benutzung großer Mengen von Kühlmitteln und unter Einsatz hoher Drücke. Damit stehen die Arbeitsgeräte ständig unter der Einwirkung verunreinigter Kühlflüssigkeiten, die in die Geräte eindringen und zu Beschädigungen führen. Insbesondere sind die Kolbenstangen von Spannvorrichtungen die Quelle der Undichtheit. Dieses erfordert Maßnahmen, mit deren Hilfe die verunreinigten Flüssigkeiten daran gehindert werden, in die Arbeitsgeräte einzudringen. Zum Einsatz kommen Abstreifer und Abdichtungen vornehmlich aus elastischem Material.

Der Einsatz von Elastomerabstreifer als Abdichtungen mit spezieller Formgebung der Abstreiflippen führt nicht immer zu dem gewünschten Erfolg. Hohe Temperaturen und Drücke führen dazu, daß die Elastomerabstreifer abheben und oder Beschädigungen unterliegen. Damit dringen die mit Spänen verunreinigten Kühlmittel entlang der Kolbenstange in das Innere des Gehäuses ein und beschädigen den Zylinderraum. Man hat daher Metallringe als Abstreifer zusätzlich vorgesehen. Diese Metallringe umschließen so fest die Kolbenstange, wie es der Antrieb zuläßt. Allein der Metallring verhindert jedoch nicht das Eindringen von Kühlmitteln in den Zylinderraum.

Bei der Abstreifvorrichtung gemäß DE 44 41 474 A1 ist ein Abstreifring aus metallischen Fasern in einen U-förmigen Ring eingesetzt, der einer Ausnehmung in einem Einsatz unterteilt. In der hierdurch gebildeten weiteren Kammer im Einsatz ist eine elastomere Dichtung aufgenommen. Der Abstreifer aus metallischen Fasern ist direkt in dem U-förmigen Ring gelagert. Dieses weist den Nachteil auf, daß der Abstreifer unbeweglich in dem Ring gelagert ist. Kühlmittel kann die metallischen Faser hinterwenden und in das Innere eindringen.

Hiervon ausgehend liegt der Erfindung das Problem zugrunde, eine Abstreifvorrichtung der eingangs genannten Art derart weiterzubilden, dass sich eine elastische Lagerung und Zentrierung des Metall-Abstreifers ergibt, sowie das Eindringen von Kühlmittel verhindert ist.

Zur Lösung dieses Problems ist die erfindungsgemäße Abstreifvorrichtung dadurch gekennzeichnet, daß oberhalb des Schenkels ein Metall-Abstreifer angeordnet und unterhalb des Schenkels in dem U-förmigen Ring ein Elastomer-Ring eingefügt ist, wobei der Metall-Abstreifer in seinem Außendurchmesser kleiner gehalten ist als der Innendurchmesser der Aussparung und von einem Elastomer-Ring umgeben ist, der zwei Lippen besitzt, die der Innenwand der Aussparung zugeordnete Schrägen aufweist und als elastisches Glied zwischen Metall-Abstreifer und Innenwand der Aussparung wirkt.

Die erfindungsgemäße Anordnung weist den Vorteil auf, dass der elastomere Ring hinter dem Abstreifer das Einringen von verunreinigten Kühlmittel in das Innere verhindert, soweit dieses Kühlmittel den Metall-Abstreifer hinterwandert. Darüber hinaus erfüllt der elastomere Ring noch die Aufgabe als elastisches Glied zwischen Metall-Abstreifer und Wandung, so daß der Metall-Abstreifer zentriert wirkt und seitlich auf die Kolbenstange einwirkende Kräfte auffängt.

Dem gegenüber ist die erfindungsgemäße Abstreifvorrichtung dadurch gekennzeichnet, daß oberhalb des Schenkels des U-förmigen Ringes ein Metall-Abstreifer und unterhalb des Schenkels in dem U-förmigen Ring ein Elastomer-Ring eingelegt ist.

Erfindungsgemäß ist der Metall-Abstreifer also außerhalb des U-förmigen Ringes angeordnet, während beim Stand der Technik gemäß D1 der Metall-Abstreifer innerhalb des U-förmigen Ringes gelagert ist.

Die Erfindung wird nachfolgend anhand eines in der Zeichnung dargestellten Ausführungsbeispiels näher beschrieben. Es zeigen:

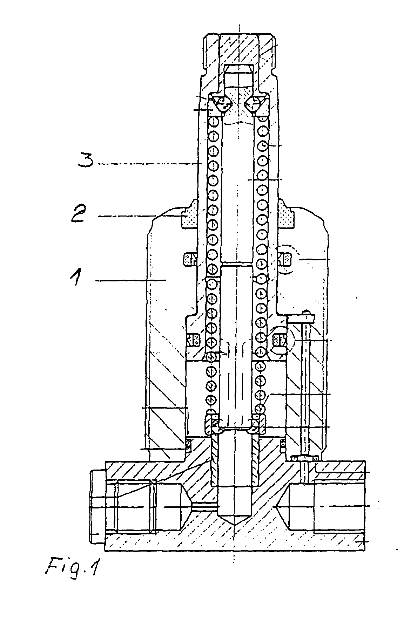

- Fig. 1: einen Schwenkspanner mit einer Abstreifvorrichtung mit den Erfindungsmerkmalen im Längsschnitt, und
- Fig. 2: die Abstreifvorrichtung gemäß Fig. 1 im Längsschnitt

Der Schwenkspanner besteht aus einem Gehäuse 1, in dem eine Kolbenstange 3 geführt ist. Die Kolbenstange 3 wird an der Stelle, wo sie aus dem Gehäuse 1 austritt durch eine Abstreif-Kombination 2 so abgedichtet, daß Verunreinigungen an das Eindringen in das Gehäuse gehindert werden.

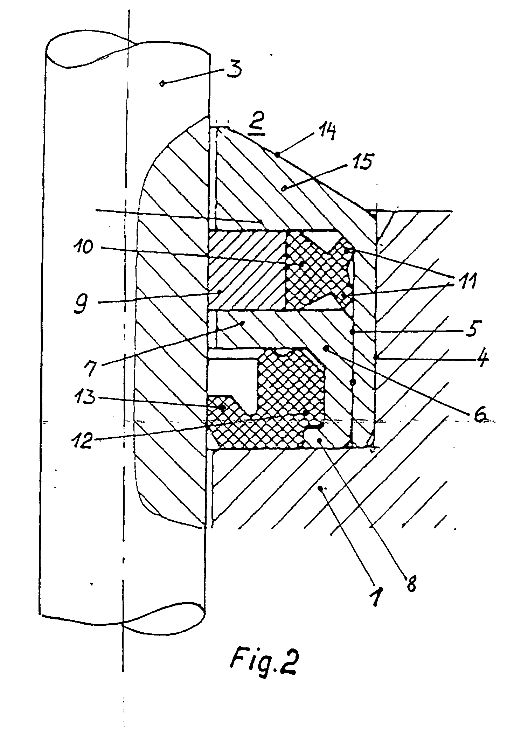

In Fig.2 ist diese Abstreif-Kombination gezeigt. In das Gehäuse 1 ist eine Ausnehmung 4 eingelassen, durch die das Gehäuse nach oben geöffnet ist. In diese Ausnehmung 4 wird die Abstreif-Kombination 2 eingesetzt. Diese Abstreif-Kombination 2 besteht aus einem Einsatz 15, der mit einer Aussparung 5 versehen ist. Diese Aussparung 5 wird so eingebracht, dass der Einsatz 15 nach unten offen ist. In die Aussparung 5 wird ein U-förmiger Ring 6 aus Metall eingepresst. Der U-förmige Ring 6 besitzt zwei Schenkel unterschiedlicher Länge. Der tragende Schenkel 7 ist so lang, dass er mit dem Einsatz 15 innen bündig abschließt. Der Stützschenkel 8 dient lediglich zum Abstützen des U-förmigen Ringes 6 nach unten und kann entsprechend kurz gehalten sein. Der U-förmige Ring 6 ist so bemessen, dass sein Schenkel 7 die Aussparung 5 annähernd mittig teilt.

Oberhalb des Schenkels 7 ist in diesen Raum der Aussparung 5 ein Metall-Abstreifer 9 eingebracht, der eng an der Kolbenstange 3 anliegt und diesen Raum in der Aussparung nur annähernd zur Hälfte ausfüllt. Diesem Metall-Abstreifer 9 ist ein Elastomer-Ring 10 zugeordnet, durch den der Raum in diesem Teil der Aussparung 5 ausgefüllt wird. Der Elastomer-Ring 10 ist mit zwei Lippen 11 versehen, die in einem vorgegebenen Winkel abgeschrägt sind. Die gleiche Abschrägung ist der Innenwand des Einsatzes 15 und dem U-förmigen Ring 6 zugeordnet. Damit liegen die Lippen 11 glatt an und verhindern so das Eindringen von verunreinigten Kühlmitteln in das Innere des Gehäuses 1, soweit diese den Metall-Abstreifer hinterwandern. Darüber hinaus erfüllt dieser Elastomer-Ring 10 noch die Aufgabe als elastisches Glied zwischen Metall-Abstreifer 9 und Wandung diesen zu zentrieren und seitlich auf die Kolbenstange 3 einwirkende Kräfte aufzufangen.

In den U-förmigen Ring 6 ist ein weitere Elastomer-Ring 12 eingelassen. Dieser Elastomer-Ring 12 ist mit einer Lippe 13 versehen, die sich fest an die Kolbenstange 3 anschmiegt. Dieser Elastomer-Ring 12 übernimmt die Aufgabe alle Flüssigkeiten, die an dem Metall-Abstreifer 9 noch an der Kolbenstange entlang gleiten abzustreifen. Damit ist eine Kombination geschaffen, die auf engstem Raum wirkt und darüber hinaus in einer Einheit zusammen gefasst ist, die leicht auswechselbar ist. Damit lassen sich Reparaturen an der Abstreifer-Kombination immer ausserhalb des Gehäuses durchführen. Der Einsatz 2 ist in seinem äusseren oberen Teil mit einer Schräge 14 versehen. Diese Schräge bewirkt, dass ein Teil der auf die Kolbenstange einwirkenden verunreinigten Kühlmittel abgeleitet wird.

Ein solcher Einsatz 2 kann überall dort Anwendung finden, wo verunreinigte Flüssigkeiten unmittelbar auf die Arbeitsgeräte einwirken. Dieses ist unter anderem auch bei Arbeitsgeräten mit langsam drehenden Wellen der Fall.

## Patentansprüche

1. Abstreifvorrichtung zum Vermindern des Eindringens von verunreinigten Flüssigkeiten in das Innere von Arbeitsgeräte, die mit Kolbenstangen und/oder langsam drehenden Wellen bestückt sind, mit:
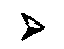 einem Einsatz (15) zur Einfügung in eine Ausnehmung in einem Gehäuse (1) des Arbeitsgerätes, der eine Aussparung (5) besitzt,
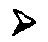 in die Aussparung (5) ist ein Ring (6) eingepreßt, dessen einer Schenkel (7) bündig mit dem Innendurchmesser des Einsatzes (15) abschließt und den Raum innerhalb der Aussparung (5) in zwei Hälften teilt,
**dadurch gekennzeichnet, daß**
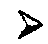 der Ring (6) U-förming ist, oberhalb des Schenkels (7) ist ein Metall-Abstreifer (9) und unterhalb des Schenkels ist in den U-förmigen Ring (6) ein Elastomer-Ring (12) eingefügt,
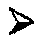 der Metall-Abstreifer (9) in seinem Außendurchmesser kleiner gehalten ist als der Innendurchmesser der Aussparung (5),
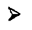 der Metall-Abstreifer (9) von einem Elastomer-Ring (10) umgeben ist, der zwei Lippen (11) besitzt, die der Innenwand der Aussparung zugeordneten Schrägen angepaßt sind, und
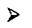 der Elastomer-Ring (10) als elastisches Glied zwischen Metall-Abstreifer (9) und Innenwand der Aussparung (5) wirkt.

2. Abstreifvorrichtung nach Anspruch 1, **dadurch gekennzeichnet, daß** in den U-förmigen Ring (6) ein Elastomer-Ring (12) eingefügt ist, der mit einer Lippe (13) versehen als Abstreifer wirkt.

3. Abstreifvorrichtung nach Anspruch 1 oder 2, **dadurch gekennzeichnet, daß** der Einsatz (15) im oberen Teil mit einer Schräge (14) versehen ist, die von Innen nach Außen abfällt.

4. Abstreifvorrichtung nach einem der Ansprüche 1 bis 3, **dadurch gekennzeichnet, daß** der Einsatz (15) mit seinem U-förmigen Ring (6), dem Metall-Abstreifer (9) und den Elastomer-Ringen (11;12) eine Einheit bildet, die auswechselbar ist.

## Claims

1. Stripper device for reducing the penetration of impure liquids into the interior of tools equipped with piston rods and/or slowly rotating shafts, comprising
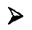 an insert (15) for insertion into a recess in a housing (1) of the tool, which is provided with a recess (5),
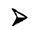 a ring (6) is press-fitted into said recess (5), whose first leg (7) is flush with the inside diameter of said insert (15) and subdivides the space inside said recess (5) into two halves,
**characterised in that**
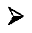 said ring (6) is U-shaped,
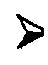 above said leg (7) a metal stripper (9) is provided and below said leg an elastomer ring (12) is inserted into said U-shaped ring (6),
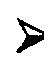 said metal stripper (9) is designed to have an outside diameter smaller than the inside diameter of said recess (5),
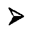 said metal stripper (9) is surrounded by an elastomer ring that is provided with two lips (11) adapted to inclinations associated with the inner wall of said recess, and
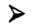 said elastomer ring (10) produces the effect of a resilient member between said metal stripper (9) and the inner wall of said recess (5).

2. Stripper device according to Claim 1, **characterised in that** an elastomer ring (12) is inserted into said U-shaped ring (6), which is provided with a lip (13) so as to act as stripper.

3. Stripper device according to Claim 1 or 2, **characterised in that** said insert (15) is provided with an inclination (14) in its upper part, which extends downwards from the inside towards the outside.

4. Stripper device according to any of the Claims 1 to 3, **characterised in that** said insert (15) cooperates with its U-shaped ring (6), said metal stripper (9) and said elastomer rings (11; 12) to form a single unit that is replaceable.

## Revendications

1. Dispositif racleur à réduire la pénétration des liquides impurs dans l'intérieur des outils équipés des tiges de piston et/ou des arbres lentement tournant, comprenant
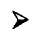 un insert (15) à insérer dans un creux dans un carter (1) de l'outil, qui est muni d'un creux (5),
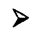 un anneau (6) est affleuré à force dans ledit creux (5), dont une première branche (7) est à fleur du diamètre intérieur dudit insert (15), en divisant l'espace à l'intérieur dudit creux (5) en deux moitiés,
**caractérisé en ce**
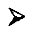 que la forme dudit anneau (6) est en U,
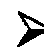 qu'au-dessus de ladite branche (7), un racleur métallique (9) est disposé, et qu'au-dessous de ladite branche, un anneau d'élastomère (12) est inséré dans ledit anneau en U (6),
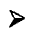 que ledit racleur métallique (9) est conçu de façon, que son diamètre extérieur soit plus petit que le diamètre intérieur dudit (5),
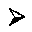 que ledit racleur métallique (9) est entouré par un anneau d'élastomère muni de deux lèvres (11) adaptées aux inclinaisons affectées à la paroi intérieur dudit creux, et
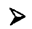 en ce que ledit anneau d'élastomère (10) produit l'effet d'un élément élastique entre ledit racleur métallique (9) et la paroi intérieure dudit creux (5).

2. Dispositif racleur selon la revendication 1, **caractérisé en ce qu'**un anneau d'élastomère (12) est inséré dans ledit anneau en U (6), qui est muni d'une lèvre (13) de manière à fonctionner en tant qu'un racleur.

3. Dispositif racleur selon la revendication 1 ou 2, **caractérisé en ce que** ledit insert (15) est muni d'une inclinaison (14) dans sa partie supérieure, qui s'étend en bas à partir de l'intérieur vers l'extérieur.

4. Dispositif racleur selon une quelconque des revendications 1 à 3, **caractérisé en ce que** ledit insert (15) coopère avec son anneau en U (6), ledit racleur métallique (9) et lesdits anneaux d'élastomère (11; 12) afin de former une seule unité qui est remplaçable.
